# EUROPÄISCHE PATENTSCHRIFT

(11) **EP 3 789 244 B1**
(45) Veröffentlichungstag und Bekanntmachung des Hinweises auf die Patenterteilung: **08.03.2023**
(21) Anmeldenummer: 20189837.6
(22) Anmeldetag: 06.08.2020
(51) Int. Cl.: B60P 3/34

(54) **KLAPPBARE WANDSTRUKTUR ZUR ERWEITERUNG DES INNENRAUMS VON TRANSPORTABLEN AUFBAUTEN, INSBESONDERE WOHNMOBILEN**
FOLDABLE WALL STRUCTURE FOR EXTENDING THE INTERIOR OF TRANSPORTABLE STRUCTURES, IN PARTICULAR CARAVANS
STRUCTURE MURALE PLIABLE PERMETTANT DE PROLONGER L'ESPACE INTÉRIEUR DES STRUCTURES TRANSPORTABLES, EN PARTICULIER DES CARAVANES AUTOMOBILES

(30) Priorität: 06.09.2019 DE 102019123934
(43) Veröffentlichungstag der Anmeldung: 10.03.2021
(73) Patentinhaber: Hödl, Peter, 85259 Wiedenzhausen (DE)
(72) Erfinder: Hödl, Peter, 85259 Wiedenzhausen (DE)
(74) Vertreter: Söllner, Udo

(56) Entgegenhaltungen:
- EP-A1- 1 092 588
- CN-A- 109 774 577
- JP-A- 2003 095 262
- US-A- 3 778 100

## Beschreibung

Die vorliegende Erfindung betrifft eine klappbare Wandstruktur zur Erweiterung des Innenraums von transportablen Aufbauten, insbesondere Wohnmobilen, mit einer ersten klappbaren Wand, welche im ausgeklappten Zustand eine Bodenwand der Wandstruktur bildet und einer zweiten klappbaren Wand, welche im ausgeklappten Zustand eine Deckenwand der Wandstruktur bildet und die Wandstruktur eine Rahmenstruktur aufweist, und die Wandstruktur eine relativ zur eingeklappten ersten Wand translatorisch verlagerbare dritte Wand aufweist, welche im verlagerten Zustand eine Außenwand der Wandstruktur bildet, nach dem Oberbegriff des Anspruchs 1.

Eine solche klappbare Wandstruktur kann also beispielsweise an einem Wohnmobil zum Einsatz kommen, um den oftmals knapp bemessenen Innenraum von solchen, ganz allgemein als transportable Aufbauten bezeichneten Gegenständen zu erweitern, bei denen es sich eben um Wohnmobile, Wohnanhänger, Verkaufsfahrzeuge, Schaustellerfahrzeuge oder andere transportable Aufbauten handeln kann, deren Innenraum temporär zur Erweiterung des Innenraums vergrößert werden soll.

Bei den lediglich als Beispiel zu nennenden Wohnmobilen oder Wohnanhängern oder anderen Fahrzeugen tritt oftmals die Situation ein, dass eine Inneneinrichtung in der Form eines Schlafabteils oder Betts quer zur Längsrichtung installiert ist, sodass die zur Verfügung stehende wirksame Länge des Schlafabteils oder Betts beschränkt ist und somit eine ausreichende Länge für insbesondere größere Personen nicht zur Verfügung steht, was dazu führt, dass solche Personen keinen zum Liegen im ausgestreckten Zustand ausreichenden Platz vorfinden.

Auch bei anderen der genannten Anwendungsbeispiele für die Verwendung der erfindungsgemäßen klappbaren Wandstruktur vorgesehenen Gegenstände, wie beispielsweise Verkaufsanhängern besteht oftmals der Bedarf, den Stauraum oder auch zur Zubereitung von Speisen oder dergleichen benötigten Innenraum des Gegenstands temporär zu vergrößern.

Anhand der DE 20 2016 008 615 U1 ist ein ausfahrbarer Erker bekannt geworden, welcher nach dem "slide-out" Prinzip ähnlich einer Schublade aus einer Seitenwand eines Wohnanhängers ausfahrbar ist. Zu diesem Zweck besitzt diese bekannte Vorrichtung elektrisch betätigte Antriebsspindeln, mit denen der Erker relativ zur Seitenwand ausgefahren und wieder eingefahren werden kann.

Ein wesentlicher Nachteil dieser bekannten Struktur eines ausfahrbaren Erkers besteht darin, dass der Erkeraufbau im eingefahrenen Zustand in den Innenraum des Wohnanhängers hinein ragt und somit Platz wegnimmt, da er von der Seitenwand in Richtung zur Innenseite des Innenraums vorsteht. Auf diese Weise kann zwar im ausgefahrenen Zustand der Innenraum des Wohnanhängers vergrößert werden, im eingefahrenen Zustand aber dahingegen wird der Innenraum durch den Erkeraufbau verkleinert.

Anhand der DE 20 2017 002 903 U1 ist ein ausklappbarer Erker für Wohnanhänger und Wohnmobile bekannt geworden, der sowohl zum Schlafen als auch zum Sitzen geeignet sein soll.

Dieser bekannte Erker weist eine Bodenwand auf, die im eingeklappten Zustand des Erkers einen Teil der Seitenwand des Wohnanhängers oder Wohnmobils bildet.

Wird der Erker nach außen geklappt, so spannen sich Textilwände als Seitenwände des ausgeklappten Erkers auf.

Diese Textilwände können aber weder einen Einbruchsschutz noch einen Wetterschutz für den Erker bereitstellen. Ist der Erker ausgeklappt und es findet ein Regenschauer oder dergleichen statt, besteht in nachvollziehbarer Weise die Gefahr, dass durch die Textilwände Wasser in den Innenraum des Erkers und letztlich über die auch im ausgeklappten Zustand schräg gestellte Bodenwand des Erkers in den Innenraum des Wohnmobils oder Wohnanhänger dringt.

Schließlich ist anhand der CH 302 346 ein Kastenwagen bekannt geworden, der eine klappbare Wandstruktur zur Erweiterung des Innenraums des Kastenwagens besitzt, wobei eine erste klappbare Wand im ausgeklappten Zustand eine Bodenwand der Wandstruktur bildet und eine zweite klappbare Wand des bekannten Kastenwagens im ausgeklappten Zustand eine Deckenwand der Wandstruktur bildet. Die bekannte Wandstruktur weist auch eine klappbare vierte Wand sowie eine klappbare fünfte Wand auf, welche im ausgeklappten Zustand eine erste und eine zweite Seitenwand der Wandstruktur bilden und als verdrehbare Seitenflügel ausgebildet sind.

Die einzelnen Wandelemente der bekannten klappbaren Wandstruktur müssen jeweils für sich alleine zum Ausklappen der Wandelemente um eine jeweilige Drehachse verdreht oder verschwenkt werden, sodass die Zahl der Arbeitsschritte zur letztendlichen Vergrößerung des Innenraums des transportablen Aufbaus ist. Darüber hinaus ist die bekannte klappbare Wandstruktur nicht zur Integration in den Aufbau eines Wohnmobils oder Wohnanhängers vorgesehen und geeignet.

Anhand der US 3 778 100 A ist eine klappbare Wandstruktur nach dem Oberbegriff des Anspruchs 1 bekannt geworden.

Ausgehend hiervon liegt der vorliegenden Erfindung die Aufgabe zugrunde, die klappbare Wandstruktur derart weiterzubilden, dass die Zahl der benötigten Schritte zur Erweiterung des Innenraums verringert ist und darüber hinaus soll die erfindungsgemäße klappbare Wandstruktur auch zur Integration in ein Wohnmobil oder einen Wohnanhänger geeignet sein und auch zur nachträglichen Integration in ein Wohnmobil oder einen Wohnanhänger geeignet sein.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft eine klappbare Wandstruktur zur Erweiterung des Innenraums von transportablen Aufbauten, insbesondere Wohnmobilen, mit einer ersten klappbaren Wand, welche im ausgeklappten Zustand eine Bodenwand der Wandstruktur bildet und einer zweiten klappbaren Wand, welche im ausgeklappten Zustand eine Deckenwand der Wandstruktur bildet und die Wandstruktur eine klappbare vierte Wand sowie eine klappbare fünfte Wand aufweist, welche im ausgeklappten Zustand eine erste und eine zweite Seitenwand der Wandstruktur bilden und die Wandstruktur eine Rahmenstruktur aufweist, und die erste Wand und die zweite Wand im eingeklappten Zustand zumindest weitgehend parallel zueinander ausgerichtet angeordnet sind und zwischen sich einen Aufnahmeraum ausbilden, in dem die dritte Wand und/oder die vierte Wand und/oder die fünfte Wand aufgenommen ist.

Die Erfindung schafft also eine klappbare Wandstruktur zur Erweiterung des Innenraums beispielsweise eines Wohnmobils, bei der die eine Außenwand der Wandstruktur ausbildende dritte Wand im Gegensatz zu der bekannten Wandstruktur nicht rotatorisch relativ zur Rahmenstruktur verschwenkt werden muss, sondern einfach translatorisch verlagert werden kann, also von der innen liegenden Position, in der der Innenraum noch nicht vergrößert ist, zur außen liegenden Position, in der der Innenraum vergrößert ist, einfach translatorisch verlagert werden kann.

Im Gegensatz aber zu der bekannten Konstruktion nach dem slide out Prinzip, das vorstehend erläutert wurde, ragt aber die erfindungsgemäße klappbare Wandstruktur im eingeklappten Zustand nicht in den Innenraum des transportablen Aufbaus hervor, sondern befindet sich in dem beispielshalber zu nennenden Wandaufbau des transportablen Aufbaus, welche die erfindungsgemäße klappbare Wandstruktur aufnimmt, integriert angeordnet, steht also nicht in den Innenraum des transportablen Aufbaus vor.

Durch die translatorische Verlagerung der dritten Wand, welche im verlagerten Zustand eine Außenwand der Wandstruktur bildet und zwar beispielsweise eine Außenwand, die im verlagerten, also ausgefahrenen Zustand, eine Ebene aufspannt, welche parallel zur Längsmittelebene des transportablen Aufbaus liegt, wird die Notwendigkeit beseitigt, dass diese oftmals eine langestreckte Wand mit einer großen Fläche darstellende Außenwand unter entsprechendem Kraftaufwand vom Benutzer der erfindungsgemäßen klappbaren Wandstruktur um eine horizontal liegende Schwenkachse herum geschwenkt beziehungsweise verdreht werden muss, was grundsätzlich gegen die auf die Außenwand wirkende Schwerkraft erfolgen muss und somit kraftaufwendig ist.

Der Benutzer der erfindungsgemäßen klappbaren Wandstruktur kann also die die Außenwand darstellende dritte Wand mittels einer einfachen translatorischen Verlagerungsbewegung in Richtung vom Innenraum des transportablen Aufbaus ausgehend nach außen verlagern, also beispielsweise heraus ziehen oder heraus schieben, und muss nicht eine Schwenkbewegung oder Verdrehbewegung an der Außenwand durchführen und kommt auf diese Weise in den Genuss einer einfachen und ohne großen Kraftaufwand möglichen Verlagerung der Außenwand und damit Vergrößerung des Innenraums des transportablen Aufbaus.

Es ist nach einer Weiterbildung der Erfindung vorgesehen, dass die dritte Wand mit der vierten und fünften Wand mittels eines jeweiligen Scharnierbauteils zur Verlagerung der vierten und fünften Wand zusammen mit der translatorisch verlagerbaren dritten Wand ausgebildet ist.

Durch diese Konfiguration wird überdies der Vorteil erreicht, dass die Verlagerungsbewegung der dritten Wand gleichzeitig zur Ausfahrbewegung oder Klappbewegung der vierten und fünften Wand der klappbaren Wandstruktur führt, welche ihrerseits die jeweiligen Seitenwände bilden der aus der Seitenebene des die erfindungsgemäße klappbare Wandstruktur aufnehmenden Aufnahmewand heraus bewegbaren oder klappbaren Wandstruktur nach der Erfindung. Damit wird gleichsam ein aus der Aufnahmewand des transportablen Aufbaus ausklappbarer oder ausfahrbarer Erker geschaffen, dessen Außenwand von der dritten Wand gebildet wird und dessen Seitenwände von der vierten und fünften Wand gebildet werden, die zusammen mit der translatorischen Verlagerungsbewegung der dritten Wand aus dem eingeklappten Zustand heraus verlagert oder bewegt werden können, um den Erker auszubilden.

Es ist nach einer Weiterbildung der Erfindung vorgesehen, dass die vierte Wand mindestens zwei Wandelemente aufweist, welche mittels eines Scharnierbauteils relativ zueinander bewegbar gekoppelt sind.

Diese Konfiguration sorgt dafür, dass die vierte Wand am Scharnierbauteil in sich geklappt werden kann und im ausgeklappten Zustand so einerseits wenig Bauraum einnimmt und andererseits über die translatorische Verlagerungsbewegung der dritten Wand aufgeklappt werden kann, um eine Seitenwand des ausgeklappten Erkers auszubilden.

In ähnlicher Weise ist es nach einer Weiterbildung der Erfindung vorgesehen, dass die fünfte Wand mindestens zwei Wandelemente aufweist, welche mittels eines Scharnierbauteils relativ zueinander bewegbar gekoppelt sind. Diese Konfiguration sorgt dafür, dass auch die fünfte Wand am Scharnierbauteil in sich geklappt werden kann und im ausgeklappten Zustand so einerseits wenig Bauraum einnimmt und andererseits über die translatorische Verlagerungsbewegung der dritten Wand aufgeklappt werden kann, um die andere Seitenwand des ausgeklappten Erkers auszubilden.

Es ist nach einer Weiterbildung der Erfindung auch vorgesehen, dass die Rahmenstruktur die erste Wand im eingeklappten Zustand umgreift. Bei dieser Rahmenstruktur kann es sich um einen Einbaurahmen handeln, welcher die erste Wand im eingeklappten Zustand umschließt oder umgreift und an dem auch die zweite Wand, die dritte Wand, die vierte Wand und die fünfte Wand vorgesehen sein können, sodass die Rahmenstruktur zusammen mit den genannten Wänden gleichsam als add-on Teil ausgebildet ist und beispielsweise auch nachträglich an einem transportablen Aufbau in der Form beispielsweise eines Wohnanhängers oder Wohnmobils angebracht werden kann. Die klappbare Wandstruktur kann also auch als Zubehörteil für die Fahrzeugindustrie vorgesehen sein.

Es ist nach einer Weiterbildung der Erfindung auch vorgesehen, dass die vierte Wand und oder die fünfte Wand mittels eines jeweiligen Scharnierbauteils an der Rahmenstruktur verschwenkbar angebunden ist. Diese Konfiguration sorgt dafür, dass die vierte und/oder fünfte Wand über das jeweilige Scharnierbauteil ausklappbar an der Rahmenstruktur vorgesehen sind, sodass die translatorische Verlagerungsbewegung der dritten Wand dafür sorgt, dass die vierte Wand und/oder fünfte Wand automatisch zusammen mit der Verlagerungsbewegung der dritten Wand ausgefahren und aufgeklappt werden, sodass die jeweiligen zwei Wandelemente der vierten Wand und/oder fünften Wand zu einer Seitenwand umkonfiguriert werden, also die vierte Wand und/oder fünfte Wand ausbilden, welche im ausgeklappten Zustand jeweils eine langgestreckte Konfiguration aufweisen.

Es ist nach einer Weiterbildung der Erfindung auch vorgesehen, dass die Rahmenstruktur miteinander zu einem rechteckförmigen Rahmen verbundene Rahmenelemente aufweist, welche die erste Wand im eingeklappten Zustand umgreifen und die Rahmenelemente flächig ausgebildet sind.

Durch diese Konfiguration wird ein Rahmen geschaffen, der über die flächigen Rahmenelemente die erste Wand im eingeklappten Zustand einschließende Anbindungsflächen aufweist, über die der Rahmen in die Wandstruktur der transportablen Aufbauten integriert werden kann, also beispielsweise auch nachträglich im Bereich einer Ausnehmung der Wandstruktur integriert werden kann, die ursprünglich beispielsweise für ein Fenster oder einen Durchlass der Wandstruktur vorgesehen war, sodass auf diese Weise auch eine nachträgliche Anordnung der erfindungsgemäßen klappbaren Wandstruktur in die Wandstruktur oder den Wandaufbau der transportablen Aufbauten integriert werden kann, also beispielsweise an der Stelle einer Ausnehmung eines Wohnmobils oder Wohnanhängers integriert werden kann, an dem ohnehin bereits ein Fenster oder ein Durchlass vorgesehen ist.

Es ist nach einer Weiterbildung der Erfindung auch vorgesehen, dass die Rahmenstruktur ein sich aus einer Ebene der Rahmenstruktur im Winkel weg erstreckendes Rahmenelement aufweist, an dem ein Scharnierbauteil vorgesehen ist, an dem die zweite Wand relativ zum Rahmenelement verschwenkbar angeordnet ist.

Dieses sich im Winkel von der Rahmenstruktur weg erstreckende Rahmenelement sorgt dafür, dass eine Überdachung oder Überdeckung des Scharnierbauteils vorgesehen ist, an dem die im ausgeklappten Zustand als Deckenwand vorgesehene zweite Wand ausgeklappt werden kann, sodass über das Rahmenelement eine Art Dach für das Scharnierbauteil vorgesehen ist und somit der Wetterschutz verbessert wird.

Es ist nach der Erfindung vorgesehen, dass die erste Wand und die zweite Wand im eingeklappten Zustand zumindest weitgehend parallel zueinander ausgerichtet angeordnet sind und zwischen sich einen Aufnahmeraum ausbilden, in dem die dritte Wand und/oder die vierte Wand und/oder die fünfte Wand aufgenommen ist.

Diese Konfiguration sorgt dafür, dass die dritte Wand und/oder vierte Wand und/oder fünfte Wand zusammen mit der ersten Wand und der zweiten Wand im eingeklappten Zustand eine kompakte Gesamtstruktur ausbilden, welche in Querschnittrichtung eine Breite aufweist, welche zumindest weitgehend der Breite der Wandstruktur der transportablen Aufbauten, also beispielsweise der Breite einer Außenwand eines Wohnmobils oder Wohnanhängers entspricht und somit die erfindungsgemäße klappbare Wandstruktur im zusammengeklappten oder eingeklappten Zustand nicht in den Innenraum des Wohnmobils oder Wohnanhängers hervorragt und sich somit wesentlich von den bekannten Strukturen unterscheidet, welche im eingefahrenen Zustand, der sich bei Slideoutsystemen dann einstellt, wenn die schubladenartige nach außen verfahrbare Einheit nicht ausgefahren ist, den Innenraum des Wohnmobils oder Wohnwagens oder Wohnanhängers beträchtlich reduzieren.

Es ist nach einer Weiterbildung der Erfindung auch vorgesehen, dass die vierte Wand und/oder die fünfte Wand im eingeklappten Zustand zwischen der ersten Wand und der dritten Wand angeordnet ist. Durch diese sandwichartige Struktur, die durch die ebenso sandwichartige Struktur der aufeinander liegenden Anordnung der weiteren Wände der erfindungsgemäßen klappbaren Wandstruktur wird die bereits erwähnte in Querschnittrichtung gerichtete geringe Breite der klappbaren Wandstruktur erreicht und der vorstehend bereits erwähnte Innenraum im eingeklappten Zustand nicht reduziert.

Es ist nach einer Weiterbildung der Erfindung auch vorgesehen, dass die erste Wand und/oder zweite Wand und/oder dritte Wand und/oder vierte Wand und/oder fünfte Wand eine jeweilige nicht-textile, steife Struktur aufweisen, sodass einerseits ein Wetterschutz erreicht wird, der von textilen Strukturen nicht erreicht werden kann und andererseits der ausgeklappte Erker auch einen Einbruchsschutz darstellt, der von textilen Strukturen nicht erbracht werden kann.

Es ist nach einer Weiterbildung der Erfindung auch vorgesehen, dass die Scharnierbauteile zumindest weitgehend fluiddicht ausgebildet sind und als Filmscharniere ausgebildet sind.

Diese Konfiguration sorgt dafür, dass im Gegensatz zu bekannten Vorrichtungen keine Feuchtigkeit oder Nässe oder Regen über die Scharnierbauteile in den Innenraum des ausgeklappten Erkers eintreten kann.

Es ist nach einer Weiterbildung der Erfindung auch vorgesehen, dass die klappbare Wandstruktur an einer Außenseite eine transparenten Überdeckung aufweist, welche Abmessungen aufweist, die zumindest weitgehend den Abmessungen der zweiten Wand entsprechen.

Auf diese Weise wird eine Konfiguration geschaffen, dass die klappbare Wandstruktur im eingeklappten Zustand an der Außenseite der Wandstruktur des beispielsweise zu nennenden Wohnmobils oder Wohnanhängers optisch wie ein dort ohnehin vorgesehenes Fenster erscheint und sich somit von der Außenstruktur des Wohnmobils oder Wohnanhängers, der Fensterflächen aufweist, nicht unterscheidet. Zudem kann die transparenten Überdeckung an der Rahmenstruktur beispielsweise nach oben auf klappbare vorgesehen sein, sodass über die transparenten Überdeckung, die im ausgeklappten Zustand die ausgeklappte und als Erker erscheinende Wandstruktur überdeckt.

Es ist nach einer Weiterbildung der Erfindung auch vorgesehen, dass die klappbare Wandstruktur einen eine Zugangsöffnung zum Innenraum der ausgeklappten Wandstruktur umgreifenden umlaufenden Rahmen aufweist, welcher relativ zur Rahmenstruktur schwenkbar ausgebildet ist und an dem die ausgeklappte Wandstruktur relativ zu einem die Wandstruktur aufnehmenden transportablen Aufbau schwenkbar ausgebildet ist.

Mit dieser Ausführung kann die ausgeklappte Wandstruktur relativ zu der einen Einbaurahmen zur Montage der Wandstruktur an einem transportablen Aufbau in der Form beispielsweise eines Fahrzeugs vorgesehenen Rahmenstruktur verschwenkt werden, um eine schräge Einbausituation an der Außenwand des Fahrzeugs ausgleichen zu können, welche relativ zur Bodenplatte des Fahrzeugs schräg gestellt ausgebildet ist. Damit kann über die Verschwenkbewegung der Wandstruktur relativ zur Rahmenstruktur erreicht werden, dass die ausgeklappte Wandstruktur eine Unterseite oder Bodenseite aufweist, welche zumindest weitgehend parallel zur Unterseite oder Bodenplatte des Fahrzeugs verläuft, wodurch vermieden wird, dass die Bodenwand der Wandstruktur im ausgeklappten Zustand schräg gestellt ist.

Schließlich ist nach der Erfindung auch ein transportabler Aufbau vorgesehen mit einer klappbaren Wandstruktur, bei dem die Wandstruktur mittels der Rahmenstruktur in eine seitliche Seitenwand und/oder Vorderseitenwand und/oder Rückseitenwand des Aufbaus integriert ist und die klappbare Wandstruktur in einer Querschnittsansicht im eingeklappten Zustand eine mit der Wandstruktur der Seitenwand und/oder Vorderseitenwand und/oder Rückseitenwand des Aufbaus zumindest weitgehend übereinstimmende Breite in Querschnittrichtung aufweist. Die klappbare Wandstruktur ragt also im nicht ausgeklappten Zustand nicht in den Innenraum des transportablen Aufbaus hervor und beschränkt oder beschneidet somit nicht den zur Verfügung stehenden Innenraum.

Die Erfindung wird im Folgenden anhand der Zeichnung näher erläutert. Diese zeigt in:
Fig. 1 eine perspektivische Ansicht eines transportablen Aufbaus in der Form eines schematisch dargestellten Wohnmobils mit einer an einer Seitenwand des Wohnmobils angeordneten klappbaren Wandstruktur nach einer Ausführungsform gemäß der vorliegenden Erfindung im ausgeklappten Zustand;
Fig. 2 eine perspektivische Darstellung der klappbaren Wandstruktur im eingeklappten Zustand;
Fig. 3 eine perspektivische Darstellung der klappbaren Wandstruktur in einer Schnittansicht gemäß dem Schnitt III-III nach Fig. 2;
Fig. 4 eine perspektivische Darstellung einer klappbaren Wandstruktur in einem ausgeklappten Zustand;
Fig. 5 eine Schnittansicht der Wandstruktur entlang des Schnitts V-V nach Fig. 4;
Fig. 6 eine perspektivische Ansicht der klappbaren Wandstruktur im ausgeklappten Zustand in einer Ansicht von oben, bei der die Deckenwand zur Erläuterung des weiteren Aufbaus weggelassen worden ist;
Fig. 7 eine perspektivische Ansicht der Wandstruktur im etwa zur Hälfte ausgeklappten Zustand;
Fig. 8 eine Schnittansicht der Wandstruktur gemäß dem Schnitt VIII-VIII nach Fig. 7;
Fig. 9 eine teilweise geschnittene Darstellung der klappbaren Wandstruktur im ausgeklappten Zustand, welche an einer Seitenwand eines Wohnmobils angeordnet worden ist und zwar im Bereich einer ohnehin an der Seitenwand vorhandenen Fensteröffnung;
Fig. 10 die Wandstruktur nach Fig. 9 im eingeklappten Zustand;
Fig. 11 eine perspektivische Darstellung einer Ausführungsform der klappbaren Wandstruktur nach der vorliegenden Erfindung mit einem relativ zur Wandstruktur verschwenkbar angeordneten Einbaurahmen; und;
Fig. 12 eine Schnittansicht eines an einer schrägen Fahrzeugseitenwand angeordneten klappbaren Wandstruktur nach der Ausführungsform gemäß Fig. 11.

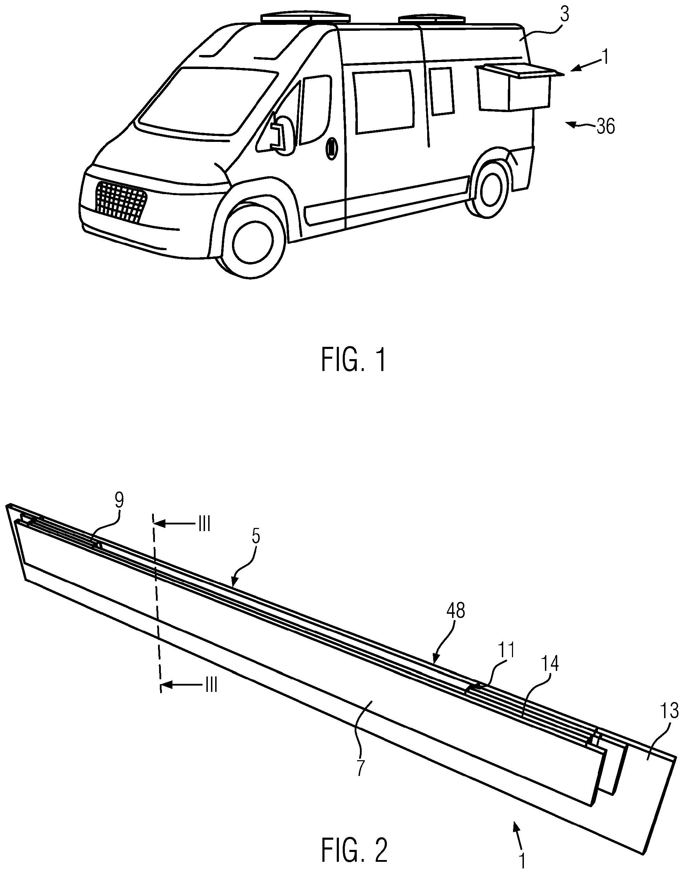

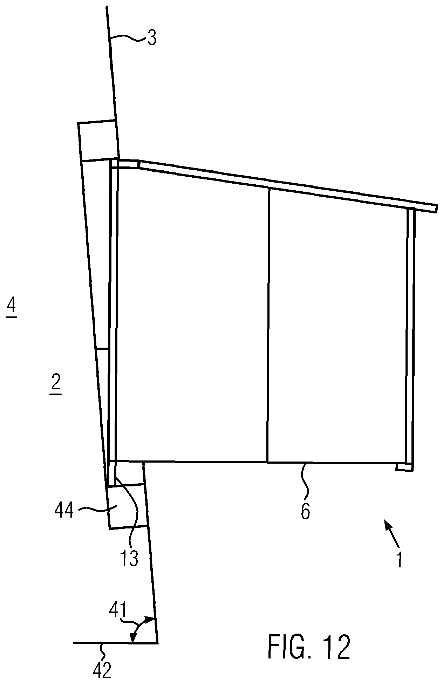

Fig. 1 der Zeichnung zeigt eine perspektivische Ansicht eines transportablen Aufbaus in der Form eines schematisch dargestellten Wohnmobils mit einer an einer Seitenwand des Wohnmobils angeordneten klappbaren Wandstruktur 1 nach einer Ausführungsform gemäß der vorliegenden Erfindung im ausgeklappten Zustand. Der Innenraum 2, der näher anhand von Fig. 12 der Zeichnung ersichtlich ist, und sich von der Seitenwand 3 des Wohnmobils in Richtung zur Fahrzeuginnenseite 4 erstreckt, kann mit der klappbaren Wandstruktur im ausgeklappten Zustand deutlich vergrößert werden.

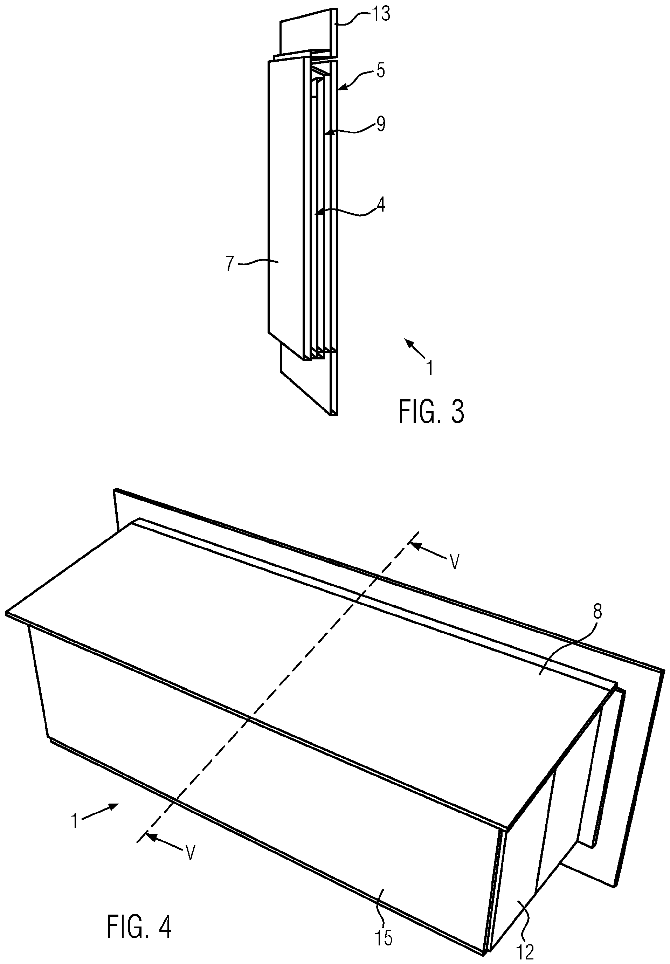

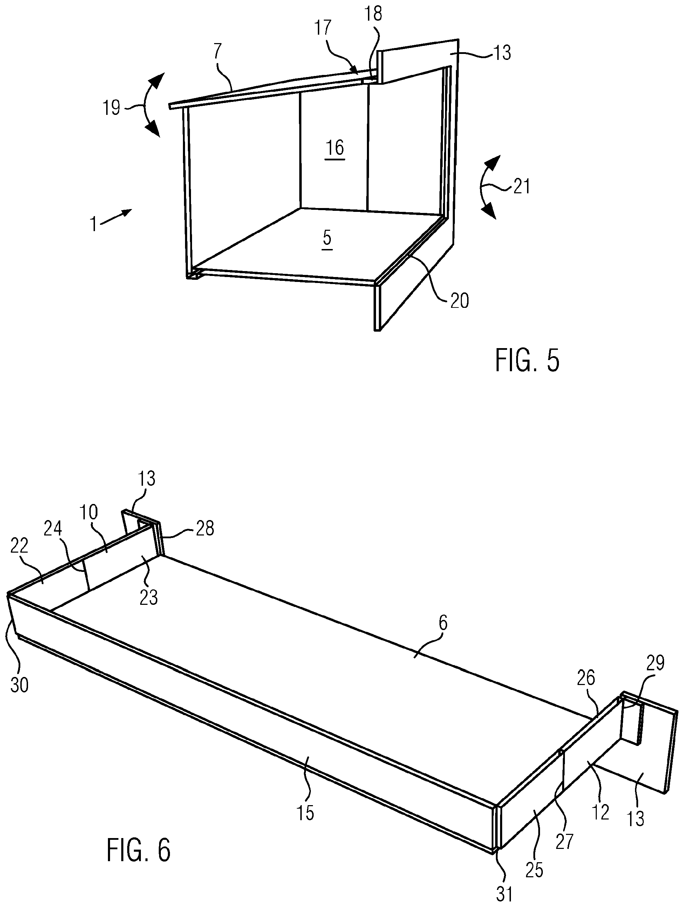

Wie es näher anhand von Fig. 2 der Zeichnung ersichtlich ist, besitzt die klappbare Wandstruktur 1 eine erste klappbare Wand 5, die im ausgeklappten Zustand - siehe beispielsweise Fig. 6 der Zeichnung - eine Bodenwand 6 der Wandstruktur bildet, und eine zweite klappbare Wand 7, welche im ausgeklappten Zustand - siehe beispielsweise Fig. 4 der Zeichnung - eine Deckenwand 8 der Wandstruktur bildet.

Darüber hinaus besitzt die klappbare Wandstruktur 1 eine klappbare vierte Wand 9, welche im ausgeklappten Zustand eine erste Seitenwand 10 bildet, die beispielsweise in Fig. 6 der Zeichnung dargestellt ist und auch eine klappbare fünfte Wand 11, welche eine zweite Seitenwand 12 bildet, welche ebenfalls anhand von Fig. 6 der Zeichnung ersichtlich ist.

Darüber hinaus weist die klappbare Wandstruktur 1 auch eine Rahmenstruktur 13 auf, welche beispielsweise als Einbaurahmen ausgebildet ist, der zur Montage der klappbaren Wandstruktur 1 an der Seitenwand 3 des transportablen Aufbaus in der Form des Wohnmobils oder eines anderen Fahrzeugs vorgesehen ist, wie dies beispielsweise anhand von Fig. 12 der Zeichnung ersichtlich ist.

Darüber hinaus weist die klappbare Wandstruktur 1 eine dritte Wand 14 auf, welche im translatorisch verlagerten Zustand eine Außenwand 15 der klappbaren Wandstruktur 1 im ausgeklappten Zustand darstellt, wie dies beispielsweise anhand von Fig. 4 der Zeichnung ersichtlich ist.

Fig. 3 der Zeichnung zeigt die klappbare Wandstruktur 1 im eingeklappten oder zusammengeklappten Zustand. Wie es ohne weiteres ersichtlich ist, schließt die Rahmenstruktur 13 die die Bodenwand 6 ausbildende erste klappbare Wand 5 in einer umlaufenden Weise ein. An der ersten Wand 5 liegt die vierte Wand 9 auf und in ähnlicher Weise liegt, wie dies anhand von Fig. 2 der Zeichnung ersichtlich ist, die fünfte Wand 11 ebenfalls an der ersten Wand 5 auf. Darüber hinaus ist an der vierten Wand 9 und der fünften Wand 11 eine Auflage vorgesehen für die nach unten geklappte Bodenwand 6.

An den beiden Wänden 9 und 11 liegt im zusammengeklappten Zustand die die Außenwand 15 bildende dritte Wand 14 auf, an die sich die zweite Wand 7 anschließt, welche im ausgeklappten Zustand die Deckenwand 8 bildet, die beispielsweise anhand von Fig. 4 der Zeichnung ersichtlich ist. Die Deckenwand 8 und die Bodenwand 6 können über nicht näher dargestellte Verriegelungen im ausgeklappten Zustand an der Außenwand 15 festgelegt werden, so dass ein nicht befugtes Öffnen der Deckenwand und der Bodenwand vermieden werden kann. Im ausgeklappten Zustand liegt die Bodenwand 6 mit der Stirnfläche an der Außenwand 15 an, so dass ein unbeabsichtigtes Einklappen oder Zusammenklappen der ausgeklappten Wandstruktur vermieden ist.

Fig. 4 der Zeichnung zeigt die klappbare Wandstruktur 1 im ausgeklappten Zustand, bei dem die Deckenwand 8 an den ersten und zweiten Seitenwänden 10, 12 aufliegt und den anhand von Fig. 5 der Zeichnung ersichtlichen Innenraum 16 der klappbaren Wandstruktur 1 nach außen abschließt.

In hierzu ähnlicher Weise schließt die erste klappbare Wand 5, welche im ausgeklappten Zustand die Bodenwand 6 der klappbaren Wandstruktur bildet, den Innenraum 16 der Wandstruktur 1 in Richtung nach außen ab, wie dies beispielsweise anhand von Fig. 5 der Zeichnung ersichtlich ist.

Die zweite klappbare Wand 7 ist mittels eines Scharnierbauteils 17 an einem Rahmenelement 18 angeordnet und zwar in einer entsprechend dem Pfeil 19 nach Fig. 5 verschwenkbaren Weise, sodass die zweite klappbare Wand 7 zur Bildung der Deckenwand 8 nach oben geklappt werden kann.

In ähnlicher Weise ist die erste klappbare Wand 5, welche im ausgeklappten Zustand die Bodenwand 6 der Wandstruktur 1 bildet, mittels eines Scharnierbauteils 20 an der Rahmenstruktur 13 verschwenkbar angeordnet und zwar in Richtung des Pfeils 21 nach Fig. 5, sodass die erste klappbare Wand 5 nach unten geklappt werden kann, um die Bodenwand 6 der klappbaren Wandstruktur 1 auszubilden.

Anhand von Fig. 6 der Zeichnung, bei der zur Erleichterung der Erläuterung der Darstellung die Deckenwand 8 weggelassen worden ist, ist ersichtlich, dass die erste Seitenwand 10, welche von der vierten Wand 9 gebildet wird, zwei Wandelemente 22, 23 aufweist, welche mittels eines Scharnierbauteils 24 relativ zueinander bewegbar gekoppelt sind.

In ähnlicher Weise besitzt die zweite Seitenwand 12 zwei Wandelemente 25,26, welche mittels eines Scharnierbauteils 27 relativ zueinander bewegbar gekoppelt sind.

Fig. 6 der Zeichnung zeigt auch, dass das Wandelement 23 der ersten Seitenwand 10 über ein Scharnierbauteil 28 relativ zur Rahmenstruktur 13 verschwenkbar ausgebildet ist und in ähnlicher Weise ist das Wandelement 26 der zweiten Seitenwand 12 über ein Scharnierbauteil 29 relativ zur Rahmenstruktur 13 verschwenkbar ausgebildet.

Zwischen dem Wandelement 22 und der Außenwand 15 beziehungsweise der dritten Wand 14 ist ein weiteres Scharnierbauteil 30 vorgesehen und in ähnlicher Weise ist zwischen dem Wandelement 25 und der Außenwand 15 beziehungsweise der dritten Wand 14 ein Scharnierbauteil 31 vorgesehen, sodass das Wandelement 22 und das Wandelement 25 jeweils relativ zur Außenwand 15 beziehungsweise der dritten Wand 14 beweglich zueinander gekoppelt sind.

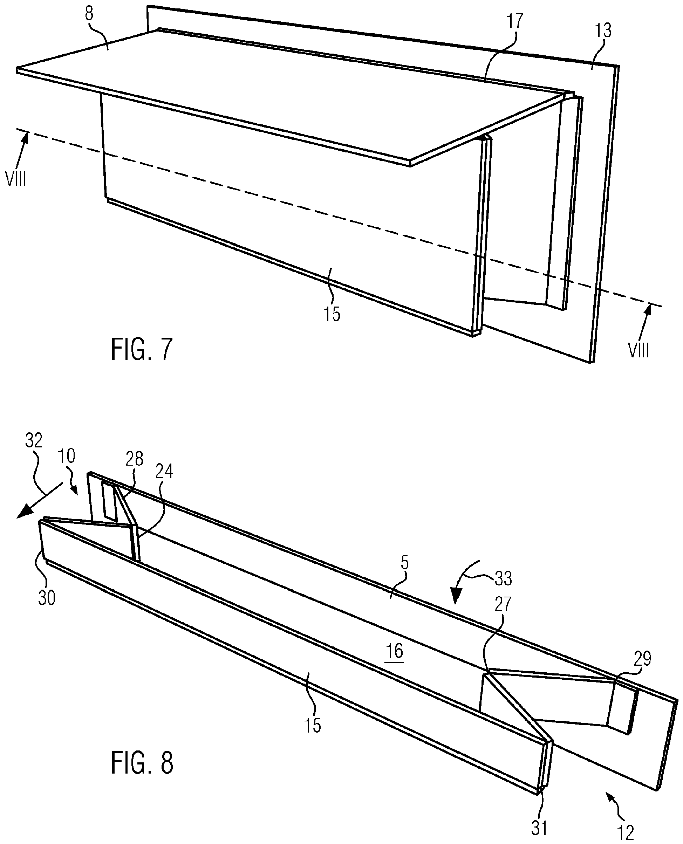

Fig. 7 der Zeichnung zeigt eine perspektivische Darstellung der klappbaren Wandstruktur 1 in einer etwa zur Hälfte ausgeklappten Stellung.

Wie es ohne weiteres ersichtlich ist, wurde zur Herbeiführung dieser Stellung die Deckenwand 8 an dem Scharnierbauteils 17 relativ zur Rahmenstruktur 13 bereits nach oben geklappt, und zwar bis auf eine solche Höhe, dass die Außenwand 15 relativ zur noch eingeklappten ersten Wand 5, welche im ausgeklappten Zustand die Bodenwand 6 bildet, translatorisch verlagert werden kann, wie sich dies auch anhand der Schnittdarstellung nach Fig. 8 der Zeichnung erschließt, welche eine perspektivische Schnittdarstellung des Schnitts VIII-VIII nach Fig. 7 darstellt.

Durch diese translatorische Verlagerung der Außenwand 15 relativ zur Bodenwand 5 wird eine in sich geschlossene und steife klappbare Wandstruktur geschaffen, welche im ausgeklappten Zustand einen Innenraum 16 bereitstellt, der den Innenraum 2 des transportablen Aufbaus wesentlich vergrößert und darüber hinaus auch einen Wetterschutz in der Form insbesondere eines Schutzes gegen das Eindringen von Wasser oder Feuchtigkeit in den Innenraum 16 bietet. Das Eindringen von Wasser in den Innenraum 16 wird verhindert, da die Scharnierbauteile 24, 27, 28, 29, 30 und 31 wasserdicht ausgebildet sind, wozu sie beispielsweise als Filmscharniere ausgebildet sind.

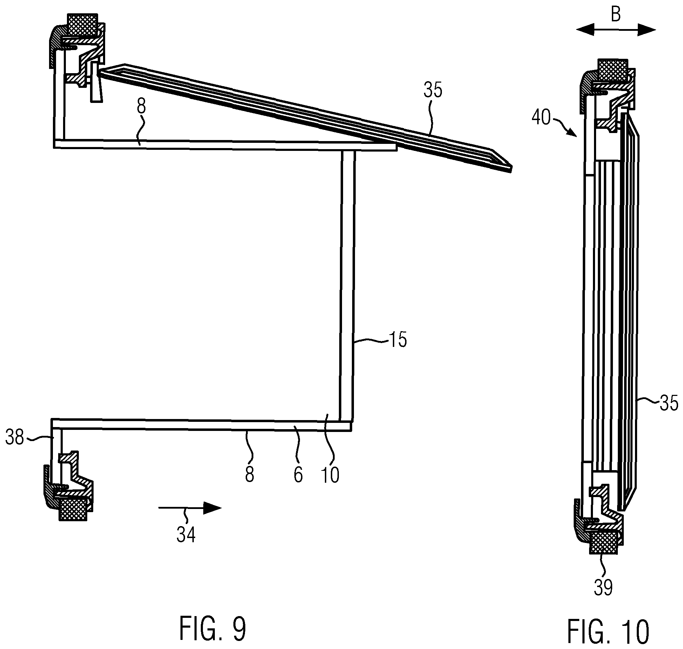

Über die translatorische Verlagerung der Außenwand 15 in Richtung des Pfeils 32 nach Fig. 8 wird eine Streckung der noch teilweise eingeklappten Seitenwände 10 und 12 zu der in Fig. 6 ersichtlichen Konfiguration erzielt, woraufhin dann die erste klappbare Wand 5, welche im ausgeklappten Zustand die Bodenwand 6 bildet, in Richtung des Pfeils 33 heruntergeklappt werden kann und zwar anhand des Scharnierbauteils 20, welches ebenfalls als Filmscharnier ausgebildet ist und sich so die im Schnitt nach der Fig. 5 ersichtliche Konfiguration ergibt, welche in einer Seitenansicht auch anhand von Fig. 9 der Zeichnung ersichtlich ist.

Bei der in Fig. 9 der Zeichnung ersichtlichen Konfiguration ist die Außenwand 15 vollständig translatorisch in Richtung des Pfeils 34 verlagert worden und die faltbaren Seitenwände 10 und 12 sind ebenfalls vollständig aufgeklappt oder ausgeklappt worden und zwar mittels der translatorischen Verlagerungsbewegung der Außenwand 15 relativ zur noch eingeklappten ersten klappbaren Wand 5, die im ausgeklappten Zustand die Bodenwand 6 bildet.

Darüber hinaus ist die zweite klappbare Wand 7, welche im ausgeklappten oder aufgeklappten Zustand die Deckenwand 8 bildet, ausgeklappt worden und liegt an den oberen Begrenzungsrändern der Außenwand 15 und der Seitenwände 10 und 12 auf und dichtet den Innenraum 16 gegen das Eindringen von Wasser oder Feuchtigkeit ab.

Bei der in Fig. 9 der Zeichnung dargestellten Konfiguration wird die klappbare Wandstruktur im aufgeklappten oder ausgeklappt Zustand darüber hinaus von einer transparenten Abdeckung 35 in der Form eines Seitenfensters des in Fig. 1 der Zeichnung dargestellten Wohnmobils 36 überdeckt, sodass durch die als Seitenwandfenster 37 dienende transparente Abdeckung 35 eine weitere Verbesserung des Wetterschutzes erreicht wird.

Die Fig. 9 der Zeichnung zeigt darüber hinaus, dass die Rahmenstruktur 13 als Einbaurahmen 38 in die Seitenwand 3 des Wohnmobils 36 dienen kann und die in Fig. 10 der Zeichnung dargestellte Konfiguration der klappbaren Wandstruktur 1 im zusammengeklappten Zustand zeigt darüber hinaus, dass die klappbare Wandstruktur 1 im zusammengeklappten Zustand eine in Richtung des Pfeils B nach Fig. 10 gemessene Abmessung oder Breite aufweist, welche geringer ist als die Breite des Wandaufbaus 39 der Seitenwand 3.

Dies sorgt dafür, dass die klappbare Wandstruktur 1 bei der dargestellten Ausführungsform außen noch von der transparenten Abdeckung 35 überdeckt werden kann, sodass sie sich harmonisch und vollständig in die Ausnehmung 40 der Seitenwand 3 des Wohnmobils 36 integrieren lässt und beispielsweise auch nachträglich einbauen lässt, da die Ausnehmung 40 in der Seitenwand 3 des Wohnmobils ohnehin vorhanden ist, da die als Seitenwandfenster 37 dienende transparente Abdeckung 35 einen Zugang zum Innenraum 2 des bei der dargestellten Ausführungsform den transportablen Aufbau bildenden Wohnmobils 3 benötigt.

Wie es beispielsweise anhand von Fig. 12 der Zeichnung ersichtlich ist, kann die Seitenwand 3 als Einbauort eines lediglich als Beispiel zur Anwendung der klappbaren Wandstruktur nach der Erfindung dienenden transportablen Aufbaus eine Schrägstellung besitzen, sodass der Winkel 41 zwischen der Seitenwand 3 und einem Boden 42 des Wohnmobils 36 einen Wert kleiner als 90 Grad annimmt.

Dies führt dazu, dass die Bodenwand 6 der ausgeklappten klappbaren Wandstruktur 1 eine Schrägstellung erfahren würde. Um dies zu vermeiden, ist es nach einer modifizierten Ausführungsform der vorliegenden Erfindung vorgesehen, dass die klappbare Wandstruktur 1 einen eine Zugangsöffnung 43 zum Innenraum 16 der ausgeklappten Wandstruktur 1 umgreifenden umlaufenden Rahmen 44 aufweist, welcher relativ zur Rahmenstruktur 13 schwenkbar ausgebildet ist und an dem die ausgeklappte Wandstruktur 1 relativ zu einem die Wandstruktur aufnehmenden transportablen Aufbau schwenkbar ausgebildet ist.

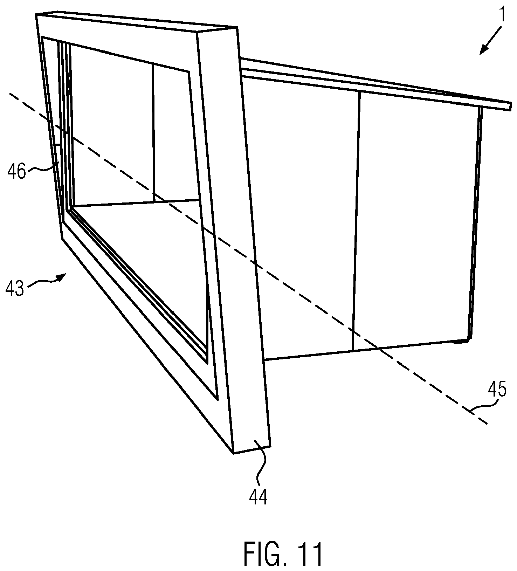

Diese Konfiguration ist in Fig. 11 und 12 der Zeichnung dargestellt. Die Rahmenstruktur 13 ist an dem Rahmen 44 verschwenkbar angeordnet und zwar so, dass die klappbare Wandstruktur 1 an einer Schwenkachse 45 um einen Winkelbereich verschwenkt werden kann, der ausreichend ist, sodass die Seitenneigung der Seitenwand 3 ausgeglichen werden kann, wie dies anhand von Fig. 12 der Zeichnung ersichtlich ist. Darüber hinaus ist zwischen dem Rahmen 44 und der Rahmenstruktur 13 eine Drehwinkelbegrenzung in der Form eines Schwenkanschlags 46 vorgesehen, welcher eine Verschwenkung der klappbaren Wandstruktur 1 an der Schwenkachse 45 über einen Winkelbereich hinaus verhindert, welcher zum Ausgleich der Seitenneigung der Seitenwand 3 notwendig ist.

Die Rahmenstruktur 13 weist mehrere Rahmenelemente 47 auf, die zu einem rechteckförmigen Rahmen verbunden sind, welche die Rahmenstruktur 13 ausbildet. Im eingeklappten oder zusammengeklappten Zustand, der anhand von Fig. 2 der Zeichnung ersichtlich ist, ist zwischen der ersten Wand 5 und der zweiten Wand 7 ein Aufnahmeraum 48 ausgebildet, in dem die dritte Wand 14 und die vierte Wand 9 sowie die zweite Wand 7 aufgenommen sind.

Die erfindungsgemäße klappbare Wandstruktur zeichnet sich insbesondere dadurch aus, dass sie eine Erweiterung des Innenraums des transportablen Aufbaus zulässt, an dem die Wandstruktur angebracht wird, ohne dass sie im zusammengeklappten oder eingeklappten Zustand in den Innenraum des transportablen Aufbaus hineinragt und auf diese Weise vermieden wird, dass der Innenraum über die zusammengeklappten Wandstruktur verringert wird.

Hinsichtlich vorstehend im Einzelnen nicht näher erläuterter Merkmale der Erfindung wird im Übrigen ausdrücklich auf die Patentansprüche und die Zeichnung verwiesen.

### Bezugszeichenliste

1. klappbare Wandstruktur
2. Innenraum
3. Seitenwand
4. Fahrzeuginnenseite
5. erste Wand
6. Bodenwand
7. zweite Wand
8. Deckenwand
9. vierte Wand
10. erste Seitenwand
11. fünfte Wand
12. zweite Seitenwand
13. Rahmenstruktur
14. dritte Wand
15. Außenwand
16. Innenraum
17. Scharnierbauteil
18. Rahmenelement
19. Pfeil
20. Scharnierbauteil
21. Pfeil
22. Wandelement
23. Wandelement
24. Scharnierbauteil
25. Wandelement
26. Wandelement
27. Scharnierbauteil
28. Scharnierbauteil
29. Scharnierbauteil
30. Scharnierbauteil
31. Scharnierbauteil
32. Pfeil
33. Pfeil
34. Pfeil
35. transparente Abdeckung
36. Wohnmobil
37. Seitenwandfenster
38. Einbaurahmen
39. Wandaufbau
40. Ausnehmung
41. Winkel
42. Wagenboden
43. Zugangsöffnung
44. Rahmen
45. Schwenkachse
46. Schwenkarm
47. Rahmenelement
48. Aufnahmeraum

## Patentansprüche

1. Klappbare Wandstruktur (1) zur Erweiterung des Innenraums (2) von transportablen Aufbauten, insbesondere eines Wohnmobils (36), mit einer ersten klappbaren Wand (5), welche im ausgeklappten Zustand eine Bodenwand (6) der Wandstruktur bildet und einer zweiten klappbaren Wand (7), welche im ausgeklappten Zustand eine Deckenwand (8) der Wandstruktur bildet, wobei die Wandstruktur (1) eine relativ zur eingeklappten ersten Wand (5) translatorisch verlagerbare dritte Wand (14) aufweist, welche im verlagerten Zustand eine Außenwand (15) der Wandstruktur (1) bildet, und die Wandstruktur eine klappbare vierte Wand (9) sowie eine klappbare fünfte Wand (11) aufweist, welche im ausgeklappten Zustand eine erste (10) und eine zweite (12) Seitenwand der Wandstruktur bilden, und die Wandstruktur eine Rahmenstruktur (13) aufweist, **dadurch gekennzeichnet, dass** die erste Wand (5) und die zweite Wand (7) im eingeklappten Zustand zumindest weitgehend parallel zueinander ausgerichtet angeordnet sind und zwischen sich einen Aufnahmeraum (48) ausbilden, in dem die dritte Wand (14) und/oder die vierte Wand (9) und/oder die fünfte Wand (11) aufgenommen ist.

2. Klappbare Wandstruktur (1) nach Anspruch 1, **dadurch gekennzeichnet, dass** die dritte Wand (14) mit der vierten (9) und fünften (11) Wand mittels eines jeweiligen Scharnierbauteils (30, 31) zur Verlagerung der vierten (9) und fünften (11) Wand zusammen mit der translatorisch verlagerten dritten Wand (14) ausgebildet ist.

3. Klappbare Wandstruktur (1) nach Anspruch 1 oder 2, **dadurch gekennzeichnet, dass** die vierte Wand (14) mindestens zwei Wandelemente (22, 23) aufweist, welche mittels eines Scharnierbauteils (24) relativ zueinander bewegbar gekoppelt sind.

4. Klappbare Wandstruktur (1) nach einem der vorstehenden Ansprüche, **dadurch gekennzeichnet, dass** die fünfte Wand (11) mindestens zwei Wandelemente (25, 26) aufweist, welche mittels eines Scharnierbauteils (27) relativ zueinander bewegbar gekoppelt sind.

5. Klappbare Wandstruktur (1) nach einem der vorstehenden Ansprüche, **dadurch gekennzeichnet, dass** die Rahmenstruktur (13) die erste Wand (5) im eingeklappten Zustand umgreift.

6. Klappbare Wandstruktur (1) nach einem der vorstehenden Ansprüche, **dadurch gekennzeichnet, dass** die vierte Wand (9) und/oder die fünfte (11) Wand mittels eines jeweiligen Scharnierbauteils (28, 29) an der Rahmenstruktur (13) verschwenkbar angebunden ist.

7. Klappbare Wandstruktur (1) nach einem der vorstehenden Ansprüche, **dadurch gekennzeichnet, dass** die Rahmenstruktur (13) miteinander zu einem rechteckförmigen Rahmen verbundene Rahmenelemente (47) aufweist, welche die erste Wand (5) im eingeklappten Zustand umgreifen und die Rahmenelemente (47) flächig ausgebildet sind.

8. Klappbare Wandstruktur (1) nach einem der vorstehenden Ansprüche, **dadurch gekennzeichnet, dass** die Rahmenstruktur (13) ein sich aus einer Ebene der Rahmenstruktur im Winkel weg erstreckendes Rahmenelement (18) aufweist, an dem ein Scharnierbauteil (17) vorgesehen ist, an dem die zweite Wand (7) relativ zum Rahmenelement (18) verschwenkbar angeordnet ist.

9. Klappbare Wandstruktur (1) nach einem der vorstehenden Ansprüche, **dadurch gekennzeichnet, dass** die vierte Wand (9) und/oder die fünfte Wand (11) im eingeklappten Zustand zwischen der ersten Wand (5) und der dritten Wand (14) angeordnet ist.

10. Klappbare Wandstruktur (1) nach einem der vorstehenden Ansprüche, **dadurch gekennzeichnet, dass** die erste Wand (5) und/oder zweite Wand (7) und/oder dritte Wand (14) und/oder vierte Wand (9) und/oder fünfte Wand (11) eine jeweilige nicht-textile, steife Struktur aufweisen.

11. Klappbare Wandstruktur (1) nach einem der vorstehenden Ansprüche, **dadurch gekennzeichnet, dass** die Scharnierbauteile (24, 27, 28, 29, 30, 31) zumindest weitgehend fluiddicht ausgebildet sind und als Filmscharniere ausgebildet sind.

12. Klappbare Wandstruktur (1) nach einem der vorstehenden Ansprüche, **dadurch gekennzeichnet, dass** die klappbare Wandstruktur an einer Außenseite eine transparente Überdeckung (35) aufweist, welche Abmessungen aufweist, die zumindest weitgehend den Abmessungen der zweiten Wand (7) entsprechen.

13. Klappbare Wandstruktur (1) nach einem der vorstehenden Ansprüche, **dadurch gekennzeichnet, dass** die Wandstruktur (1) einen eine Zugangsöffnung (43) zum Innenraum (16) der ausgeklappten Wandstruktur (1) umgreifenden umlaufenden Rahmen (44) aufweist, welcher relativ zur Rahmenstruktur (13) schwenkbar ausgebildet ist und an dem die ausgeklappte Wandstruktur (1) relativ zu einem die Wandstruktur (1) aufnehmenden transportablen Aufbau (36) schwenkbar ausgebildet ist.

14. Transportabler Aufbau mit einer klappbaren Wandstruktur (1) nach einem der vorstehenden Ansprüche, **dadurch gekennzeichnet, dass** die Wandstruktur (1) mittels der Rahmenstruktur (13) in eine seitliche Seitenwand (3) und/oder Vorderseitenwand und/oder Rückseitenwand des Aufbaus integriert ist und die klappbare Wandstruktur (1) in einer Querschnittansicht im eingeklappten Zustand eine mit der Wandstärke der Seitenwand und/oder Vorderseitenwand und/oder Rückseitenwand des Aufbaus zumindest weitgehend übereinstimmende Breite in Querschnittrichtung aufweist.

## Claims

1. Foldable wall structure (1) for extending the interior (2) of portable constructions, in particular of a camper van (36), having a first foldable wall (5), which forms a base panel (6) of the wall structure in the folded-out state, and a second foldable wall (7), which forms a top panel (8) of the wall structure in the folded-out state, wherein the wall structure (1) has a third wall (14) that is translationally movable relative to the folded-in first wall (5), which forms an outer wall (15) of the wall structure (1) in the moved state, and the wall structure has a foldable fourth wall (9) as well as a foldable fifth wall (11), which form a first (10) and a second (12) side panel of the wall structure in the folded-out state, and the wall structure has a frame structure (13),
**characterised in that** the first wall (5) and the second wall (7) are arranged aligned at least substantially parallel to each other in the folded-in state and form a receiving chamber (48) between them, in which the third wall (14) and/or the fourth wall (9) and/or the fifth wall (11) is received.

2. Foldable wall structure (1) according to claim 1, **characterised in that** the third wall (14) is configured with the fourth (9) and fifth (11) wall by means of a respective hinge component (30, 31) for moving the fourth (9) and fifth (11) wall together with the translationally moved third wall (14).

3. Foldable wall structure (1) according to claim 1 or 2, **characterised in that** the fourth wall (14) has at least two wall elements (22, 23) which are movably coupled relative to each other by means of a hinge component (24).

4. Foldable wall structure (1) according to one of the preceding claims, **characterised in that** the fifth wall (11) has at least two wall elements (25, 26), which are movably coupled relative to each other by means of a hinge component (27).

5. Foldable wall structure (1) according to one of the preceding claims, **characterised in that** the frame structure (13) surrounds the first wall (5) in the folded-in state.

6. Foldable wall structure (1) according to one of the preceding claims, **characterised in that** the fourth wall (9) and/or the fifth (11) wall is pivotably connected to the frame structure (13) by means of a respective hinge component (28, 29).

7. Foldable wall structure (1) according to one of the preceding claims, **characterised in that** the frame structure (13) has frame elements (47) connected with each other to form a right-angled frame, which surround the first wall (5) in the folded-in state and the frame elements (47) are formed two-dimensionally.

8. Foldable wall structure (1) according to one of the preceding claims, **characterised in that** the frame structure (13) has a frame element (18) extending away from a plane of the frame structure at an angle, on which a hinge component (17) is provided, on which the second wall (7) is arranged pivotably relative to the frame element (18).

9. Foldable wall structure (1) according to one of the preceding claims, **characterised in that** the fourth wall (9) and/or the fifth wall (11) is arranged between the first wall (5) and the third wall (14) in the folded-in state.

10. Foldable wall structure (1) according to one of the preceding claims, **characterised in that** the first wall (5) and/or second wall (7) and/or third wall (14) and/or fourth wall (9) and/or fifth wall (11) have a respective non-fabric, rigid structure.

11. Foldable wall structure (1) according to one of the preceding claims, **characterised in that** the hinge components (24, 27, 28, 29, 30, 31) are formed at least substantially fluid-tightly and are formed as film hinges.

12. Foldable wall structure (1) according to one of the preceding claims, **characterised in that** the foldable wall structure has a transparent covering (35) on an outer side, which has dimensions that at least substantially correspond to the dimensions of the second wall (7).

13. Foldable wall structure (1) according to one of the preceding claims, **characterised in that** the wall structure (1) has a circumferential frame (44) that engages around an access opening (43) to the interior (16) of the folded-out wall structure (1), which frame is formed pivotably relative to the frame structure (13) and on which the folded-out wall structure (1) is formed pivotably relative to a portable construction (36) that receives the wall structure (1).

14. Portable construction comprising a foldable wall structure (1) according to one of the preceding claims, **characterised in that** the wall structure (1) is integrated into a lateral side wall (3) and/or front side wall and/or back side wall of the construction by means of the frame structure (13), and the foldable wall structure (1), in the folded-in state in a cross-sectional view, has a width in the cross-sectional direction that is at least substantially consistent with the wall thickness of the side wall and/or front side wall and/or back side wall of the construction.

## Revendications

1. Structure murale pliable (1) permettant d'agrandir l'espace intérieur (2) de structures transportables, notamment d'une autocaravane (36), comportant une première paroi pliable (5) constituant, à l'état déplié, une paroi inférieure (6) de la structure murale, et une deuxième paroi pliable (7) constituant, à l'état déplié, une paroi supérieure (8) de la structure murale ; ladite structure murale (1) présentant une troisième paroi (14) déplaçable en translation par rapport à la première paroi (5) repliée, laquelle troisième paroi constitue, à l'état déplacé, une paroi extérieure (15) de la structure murale (1), et la structure murale présentant une quatrième paroi (9) pliable ainsi qu'une cinquième paroi (11) pliable qui constituent, à l'état déplié, une première (10) et une deuxième (12) paroi latérale de la structure murale, et la structure murale présentant une structure d'encadrure (13),
**caractérisée en ce que** la première paroi (5) et la deuxième paroi (7) sont au moins majoritairement parallèles à état replié et forment entre elles un espace de logement (48) dans lequel logent la troisième paroi (14) et/ou la quatrième paroi (9) et/ou la cinquième paroi (11).

2. Structure murale pliable (1) selon la revendication 1, **caractérisée en ce que** la troisième paroi (14), avec les quatrième (9) et cinquième (11) parois, est conçue au moyen d'une charnière (30, 31) respective permettant aux quatrième (9) et cinquième (11) parois de suivre le mouvement de déplacement en translation de la troisième paroi (14).

3. Structure murale pliable (1) selon la revendication 1 ou 2, **caractérisée en ce que** la quatrième paroi (14) présente au moins deux éléments de paroi (22, 23) couplés déplaçables l'un par rapport à l'autre au moyen d'une charnière (24).

4. Structure murale pliable (1) selon l'une des revendications précédentes, **caractérisée en ce que** la cinquième paroi (11) présente au moins deux éléments de paroi (25, 26) couplés déplaçables l'un par rapport à l'autre au moyen d'une charnière (27).

5. Structure murale pliable (1) selon l'une des revendications précédentes, **caractérisée en ce que** la structure d'encadrure (13) enceint la première paroi (5) à l'état replié.

6. Structure murale pliable (1) selon l'une des revendications précédentes, **caractérisée en ce que** la quatrième paroi (9) et/ou la cinquième paroi (11) sont reliées pivotantes à la structure d'encadrure (13) au moyen d'une charnière (28, 29) respective.

7. Structure murale pliable (1) selon l'une des revendications précédentes, **caractérisée en ce que** la structure d'encadrure (13) présente des éléments d'encadrure (47) raccordés entre eux pour former une encadrure rectangulaire et enceignant la première paroi (5) à l'état replié, les éléments d'encadrure (47) étant de conception plane.

8. Structure murale pliable (1) selon l'une des revendications précédentes, **caractérisée en ce que** la structure d'encadrure (13) présente un élément d'encadrure (18) qui part d'un plan de la structure d'encadrure en formant un angle et au niveau duquel est prévue une charnière (17) au niveau de laquelle la deuxième paroi (7) est agencée pivotante par rapport audit élément d'encadrure (18).

9. Structure murale pliable (1) selon l'une des revendications précédentes, **caractérisée en ce que** la quatrième paroi (9) et/ou la cinquième paroi (11) sont agencées, à l'état replié, entre la première paroi (5) et la troisième paroi (14).

10. Structure murale pliable (1) selon l'une des revendications précédentes, **caractérisée en ce que** la première paroi (5) et/ou la deuxième paroi (7) et/ou la troisième paroi (14) et/ou la quatrième paroi (9) et/ou la cinquième paroi (11) présentent chacune une structure rigide non textile.

11. Structure murale pliable (1) selon l'une des revendications précédentes, **caractérisée en ce que** les charnières (24, 27, 28, 29, 30, 31) sont au moins majoritairement étanches aux fluides et conçues sous la forme de charnières actives.

12. Structure murale pliable (1) selon l'une des revendications précédentes, **caractérisée en ce que** la structure murale pliable présente sur son extérieur un organe de recouvrement transparent (35) dont les dimensions correspondent au moins majoritairement aux dimensions de la deuxième paroi (7).

13. Structure murale pliable (1) selon l'une des revendications précédentes, **caractérisée en ce que** la structure murale (1) présente un cadre (44) circonférentiel entourant une ouverture d'accès (43) de la structure murale (1) dépliée qui permet un accès à l'espace intérieur (16), ledit cadre étant pivotant par rapport à la structure d'encadrure (13) et la structure murale (1) dépliée étant pivotante, au niveau dudit cadre, par rapport à une structure transportable (36) dans laquelle est reçue la structure murale (1).

14. Structure transportable comportant une structure murale pliable (1) selon l'une des revendications précédentes, **caractérisée en ce que** la structure murale (1) est intégrée au moyen de la structure d'encadrure (13) dans une paroi latérale (3) et/ou une paroi avant et/ou une paroi arrière de ladite structure transportable, et la structure murale pliable (1) présente, vue en coupe transversale à l'état replié, une largeur dans la direction de la coupe transversale qui équivaut au moins majoritairement à l'épaisseur de la paroi latérale et/ou paroi avant et/ou paroi arrière de ladite structure transportable.
